# EUROPEAN PATENT SPECIFICATION

(11) **EP 0 277 793 B1**
(45) Date of publication and mention of the grant of the patent: **29.09.1993**
(21) Application number: 88300826.0
(22) Date of filing: 01.02.1988
(51) Int. Cl.: G11B 21/08, G11B 7/08

(54) **Access control apparatus**
Zugriffssteuerungsgerät
Appareil de commande d'accès

(30) Priority: 02.02.1987 JP 23165/87
(43) Date of publication of application: 10.08.1988
(73) Proprietor: SONY CORPORATION, Tokyo 141 (JP)
(72) Inventor: Kimura, Shuichi c/o Patent Division, Shinagawa-ku Tokyo 141 (JP)
(74) Representative: Pilch, Adam John Michael

(56) References cited:
- EP-A- 0 080 212
- EP-A- 0 228 848
- FR-A- 2 556 870
- US-A- 4 096 534
- PATENT ABSTRACTS OF JAPAN vol. 9, no. 109 (P-355)(1832) 14 May 1985, & JP-A-59 231777
- PATENT ABSTRACTS OF JAPAN vol. 9, no. 276 (P-402)(1999) 02 November 1985, & JP-A-60 121577
- IEEE TRANSACTIONS ON MAGNETICS. vol. MAG22, no. 5, September 1986, NEW YORK US pages 925 - 927; SCHULTZ et al.: "RAPID ACCESS SYSTEM FOR OPTICAL AND MAGNETO-OPTICAL DISC STORAGE"
- JP-A-62 271270*FUJITSU LTD.* 25 November 1987, & PATENT ABSRACTS OF JAPAN, Vol. 12,no. 154*P-700**3001* 12 May 1988,

## Description

This invention relates to access control apparatus for use with a disc drive having a head which is movable with respect to recording tracks formed on a disc, to provide a reproduced signal.

Access control apparatus has been proposed for controlling the movement of a head in a direction radially of a disc, to perform access from one recording track to a desired recording track. Accurate access to the desired recording track requires accurate counting of the number of recording tracks traversed by the head. For this reason, a counter is generally used for counting traverse detection pulses to accumulate a count corresponding to the number of recording tracks traversed by the head. It is current practice to produce the traverse detection pulses by processing the reproduced signal supplied from the head. A serious problem which can occur with this type of access control apparatus is that noise is combined with the traverse detection pulses, causing an error introduced into the accumulated count of the counter when the head traverse speed increases for the purpose of rapid access to the desired recording track. Accordingly, the wrong track can be accessed.

In Patent Abstracts of Japan, Volume 9, No 109 (p-355) [1832], 14.05.82, an inter-track detector is disclosed which generates a signal indicative of areas between tracks by driving pulse generating means with a signal produced by shaping the reproduced data signal. The reproduced data signal is supplied to waveform shaping means which shapes the signal for signal levels higher than a threshold level, indicating that a track is being crossed. The resulting pulsed output of the waveform shaping means is used to drive the pulse generating means. The duration of pulses from the pulse generating means is longer than the time between pulses from the waveform shaping means and hence the period of the reproduced data signal. For an area between tracks, there is no output from the waveform shaping means since the reproduced signal level is less than the threshold. The output of the pulse generating means thus returns to its low level to indicate an area between tracks. While this provides for inter-track detection at high access speeds, there is no provision for switching between a high speed detection mode and a low speed detection mode as required in dependence on the access speed.

According to one aspect of the present invention there is provided access control apparatus for a disc drive having a head movable with respect to tracks on a disc for reproducing a signal including a data signal, the apparatus comprising:
means responsive to a control signal for moving the head in a direction radially of the disc to perform access from one track to another track; first traverse detector means responsive to the data signal included in the reproduced signal for producing first traverse detection pulses, the first traverse detector means including means responsive to the data signal for producing trigger pulses for respective cycles of the data signal having a magnitude greater than a predetermined value, and a timer responsive to each of the trigger pulses for changing to a first state, the timer returning to a second state a predetermined time (τ) after occurrence of each trigger pulse, the time (τ) being slightly longer than the longest possible period of the data signal;
a counter for counting the first traverse detection pulses to accumulate a count corresponding to the number of tracks traversed by the head; and
means for producing the control signal in accordance with the count in the counter;
characterised in that the apparatus includes:
means for detecting the speed of movement of the head;
second traverse detector means including a first low pass filter having a first time constant, the first low pass filter being arranged to receive the reproduced signal for producing a first filtered signal, a second low pass filter having a second time constant slower than the first time constant, the second low pass filter being arranged to receive the reproduced signal for producing a second filtered signal, and means for producing second traverse detection pulses each produced when the first filtered signal is greater than the second filtered signal; and
a switching circuit including means for supplying the first traverse detection pulses to the counter when the speed of movement of the head exceeds a predetermined value and for supplying the second traverse detection pulses to the counter when the speed of movement of the head is less than the predetermined value.

According to another aspect of the invention there is provided access control apparatus for a disc drive having a head movable with respect to tracks on a disc for reproducing a signal including a data signal, the apparatus comprising:
means responsive to a control signal for moving the head in a direction radially of the disc to perform access from one track to another track; first traverse detector means responsive to the data signal included in the reproduced signal for producing first traverse detection pulses, the first traverse detector means including means responsive to the data signal for producing trigger pulses for respective cycles of the data signal having a magnitude greater than a predetermined value, and a timer responsive to each of the trigger pulses for changing to a first state, the timer returning to a second state a predetermined time (τ) after occurrence of each trigger pulse, the time (τ) being slightly longer than the longest possible period of the data signal;
a counter for counting the first traverse detection pulses to accumulate a count corresponding to the number of tracks traversed by the head; and
means for producing the control signal in accordance with the count in the counter;
characterised in that the apparatus includes:
means for detecting the speed of movement of the head;
second traverse detector means including an integrating circuit arranged to receive the reproduced signal for producing an integrated signal, and means for producing second traverse detection pulses each produced when the integrated signal is greater than a predetermined value; and
a switching circuit including means for supplying the first traverse detection pulses to the counter when the speed of movement of the head exceeds a predetermined value and for supplying the second traverse detection pulses to the counter when the speed of movement of the head is less than the predetermined value.

Embodiments of the invention provide access control apparatus which permits rapid access from one recording track to a desired recording track with high accuracy. The preferred access control apparatus can produce traverse detection pulses without noise combined therewith even when the head moves at high speeds for rapid access to a desired recording track, the apparatus switching between a low speed detection mode and a high speed detection mode as required in dependence upon the access speed.

The invention will now be described by way of example with reference to the accompanying drawings, throughout which like parts are referred to by like references, and in which:
Figure 1 is a schematic block diagram showing a previously-proposed access control apparatus;
Figure 2 is an enlarged schematic plan view showing a recording track formed on a disc;
Figures 3(A) to 3(E) show waveforms used for explaining the operation of the previously-proposed access control apparatus of Figure 1;
Figure 4 is a circuit diagram showing one example of a traverse detection circuit in the apparatus of Figure 1;
Figure 5 is a circuit diagram showing another example of a traverse detection circuit in the apparatus of Figure 1;
Figure 6 is a schematic block diagram showing an access control apparatus in accordance with one embodiment of the invention;
Figure 7 is a circuit diagram showing the detailed arrangement of a traverse detection circuit in the apparatus of Figure 6;
Figures 8(A) to 8(c) show three waveforms used for explaining the operation of the high speed traverse detection circuit of Figure 7; and
Figures 9(A) and 9(B) show two waveforms used for explaining the operation of a switching circuit in the apparatus of Figure 6.

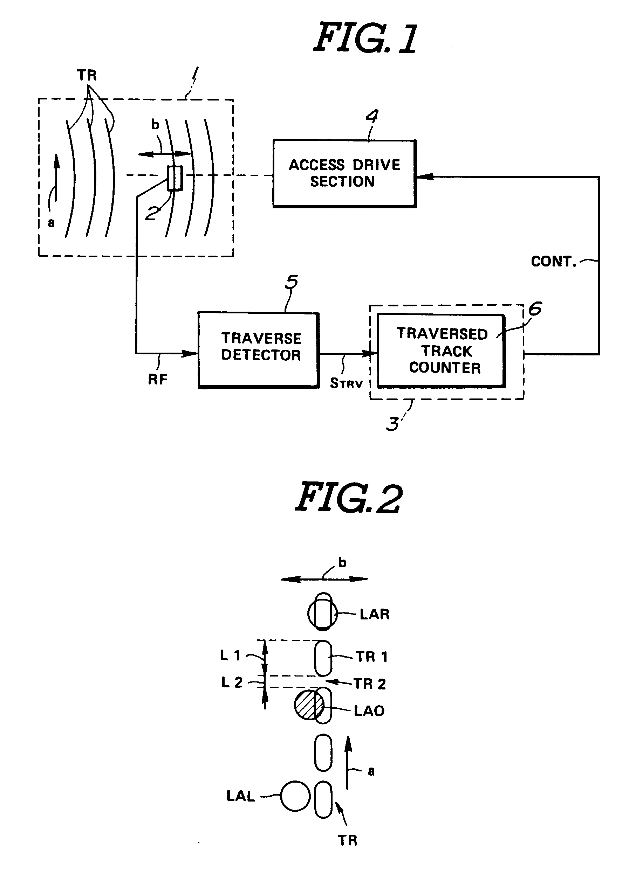

Prior to description of the preferred embodiment of the present invention, a previously-proposed disc player unit, shown in Figure 1, will be briefly described in order to specifically point out the difficulties with such a unit.

Referring to Figure 1, the previously-proposed compact disc (CD) player unit is shown as including an optical head 2 for reading the data recorded on a spiral track TR on an optical disc 1. For this purpose, the optical head 2 applies three laser beams to the optical disc 1 and produces a reproduced signal RF according to a main laser beam and a tracking error signal according to sub-laser beams reflected by the optical disc 1.

As shown in Figure 2, the main laser beam LAO and the sub-laser beams LAR and LAL impinge on the optical disc 1 such that the spots formed thereby are arranged substantially along the direction of the recording track TR. The recording track TR is formed by a pit TR1 and reflecting or mirror sections TR2 having lengths L1 and L2, respectively, selected according to an eight-to-fourteen modulation (EFM) code. The pit and mirror sections TR1 and TR2 have a length ranging from 3T to 11T. Accordingly, the longest length of the pit or mirror sections can be represented as 11T.

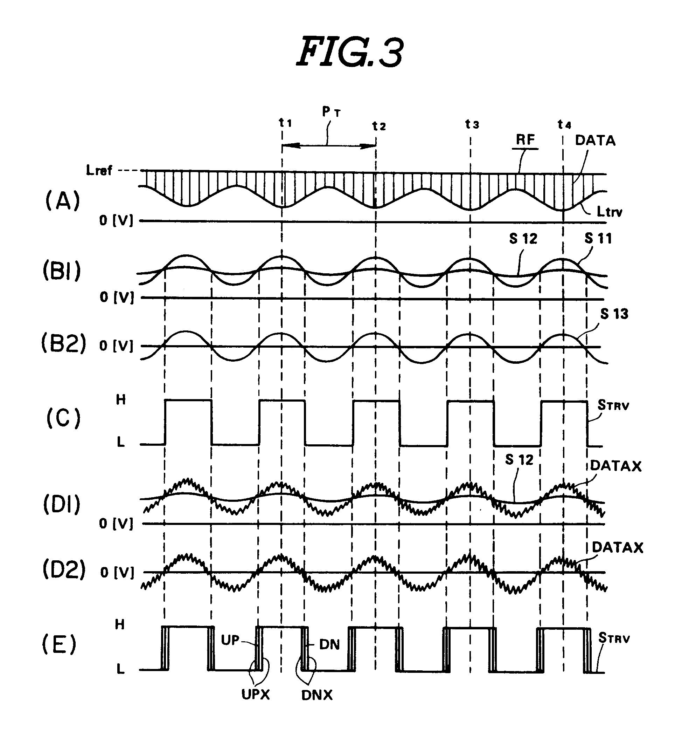

Returning to Figure 1, access to a recording track having a predetermined address recorded thereon is made through an access control section 3. The access control section 3 produces a control signal CONT to an access drive section 4 which thereby moves the optical head 2 in a traversing direction b radially to the optical disc 1. During the access mode of operation, the optical head 2 traverses tracks as the optical disc 1 is rotating in the rotational direction a, and the optical head 2 produces the reproduced signal RF, as shown in Figure 3(A), which comprises a data signal DATA modulated by a traverse signal Ltrv. The data signal DATA represents the lengths of the pit and mirror sections TR1 and TR2. It is typically the practice that the data signal DATA is generated such that its frequency is 200 kHz when the pit or mirror section has the longest length 11T. A reference signal Lref corresponds to the intensity of the beam reflected by each mirror section TR2. The traverse signal Ltrv varies in the intensity of the reflected beam depending on whether the beam impinges on tracks or land between the tracks.

The reproduced signal RF is fed to a traverse detection circuit 5. The traverse detection circuit 5 supplies a traverse detection pulse STRV to the access control section 3 each time the optical head 2 traverses one recording track TR. The access control section 3 includes a traversed track counter 6 for counting the number of the traverse detection pulses STRV fed thereto from the traverse direction circuit 5. The access control section 3 controls the access drive section 4 to move the optical head 2 until the count in the traversed track counter 6 reaches a preset value corresponding to the recording track to which access is required.

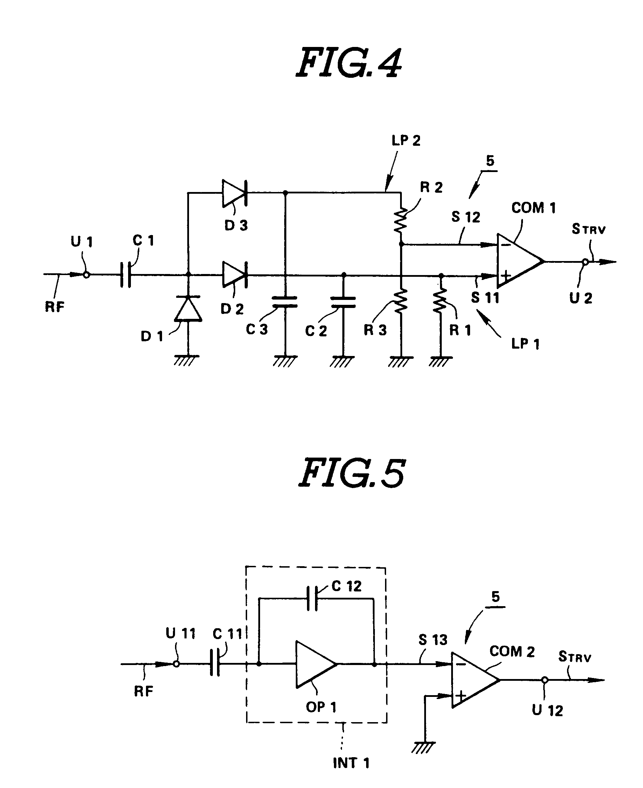

Referring to Figure 4, there is illustrated one type of traverse detection circuit 5, which includes first and second low pass filters LP1 and LP2. The first low pass filter LP1 includes a diode D2, a capacitor C2 and a resistor R1, the values of the capacitor C2 and the resistor R1 being selected such that the first low pass filter LP1 has a relatively fast time constant. The first low pass filter LP1 has an input coupled through a coupling capacitor C1 to an input terminal U1 to which the reproduced signal RF is applied. The coupling capacitor C1 serves to remove the direct-current component from the reproduced signal RF. The output of the first low pass filter LP1 is coupled to the non-inverting or positive input of a comparator COM1. The second low pass filter LP2 includes a diode D3, a capacitor C3, and two resistors R2 and R3 which form a voltage divider. The values of the capacitor C3 and the resistors R2 and R3 are selected such that the second low pass filter LP2 has a relatively slow time constant. The second low pass filter LP2 has an input also coupled through the coupling capacitor C1 to the input terminal U1. The junction of the resistors R2 and R3 is connected to the inverting or negative input of the comparator COM1. The time constants of the first and second low pass filters LP1 and LP2 are both selected to be sufficiently longer than the period of the data signal DATA contained in the reproduced signal RF so that no pulsation is superimposed on signals S11 and S12 produced at the outputs of the first and second low pass filters LP1 and LP2. The signals S11 and S12 are shown in Figure 3(B1).

As can be seen from Figure 3(B1), the signal S11, which is supplied from the first low pass filter LP1 having a fast time constant, follows the traverse signal Ltrv contained in the reproduced signal RF [Figure 3(A)], whereas the signal S12, which is supplied from the second low pass filter LP2 having a slow time constant, is a lower amplitude signal similar to a signal which would be obtained by averaging the signal S11. The traverse detection pulse STRV signal is produced at an output terminal U2 of the comparator COM1, and is fed to the traversed track counter 6. The traverse detection pulse signal changes from one of its high and low levels to the other level each time the signal S11 crosses the signal S12, as shown in Figure 3(C). Each traverse detection pulse STRV is arranged to cause its leading or trailing edge to increase the count in the traversed track counter 6 by one step each time the optical head 2 traverses a recording track TR. Accordingly, the count in the traversed track counter 6 corresponds to the number of tracks traversed by the optical head 2.

A serious problem which can occur with this type of access control apparatus is that pulsating noise may be combined with the traverse detection pulses STRV, causing an error introduced into the result of the counting operation of the traversed track counter when the optical head traverse speed increases for the purpose of rapid access. The reason for this will now be described in greater detail.

As the speed of movement of the optical head 2 in the traversing direction increases, the frequency of the traverse signal Ltrv contained in the reproduced signal RF becomes closer to the frequency (for example, 200 kHz) of the data signal DATA. This means that the time constant of the first low pass filter LP1 provided for the purpose of eliminating the data signal DATA becomes close to the rate of change of the traverse signal Ltrv. As a result, the first low pass filter LP1 cannot remove the data signal DATA completely from the reproduced signal RF, and a noise signal DATAX corresponding to the data signal DATA will be superimposed on the signal S11, as shown in Figure 3(D1). When such a noise signal DATAX is superimposed on the signal S11, the noise signal crosses the signal S12 at points before and after those at which the undegraded signal S11 would have crossed the signal S12, so that the comparator COM1 will produce noise pulses UPX and DNX as well as a correct traverse detection pulse STRV as shown in Figure 3(E), causing an error to be introduced into the result of the counting operation of the traversed track counter 6. It may be thought that this problem could be solved by selecting the first low pass filter LP1 to have such a slow time constant that substantially no noise signal DATAX will occur. However, this apparent solution would suppress not only the noise signal DATAX, but also the signal S11 to such an extent that the comparator COM1 would fail to compare it with the signal S12.

Referring to Figure 5, there is illustrated another type of traverse detection circuit 5 which includes an integrating circuit INT1 formed by an operational amplifier OP1 and a capacitor C12. The integrating circuit INT1 has an input coupled through a coupling capacitor C11 to an input terminal U11 to which the reproduced signal RF is applied. The coupling capacitor C11 serves to remove the direct-current component from the reproduced signal RF. The integrating circuit INT1 integrates the reproduced signal RF and produces an integrated signal S13, as shown in Figure 3(B2). The integrating circuit INT1 is selected to have such a time constant that no pulsation is combined with the signal S13. The output of the integrating circuit INT1 is coupled to the negative input of a comparator COM2, the positive input of which is connected to earth or ground. The comparator COM2 compares the integrated signal S13 with a reference voltage (in the illustrated case, zero volt). The traverse detection pulse STRV signal is produced at an output terminal U12 of the comparator COM2 and fed to the traversed track counter 6. The traverse detection pulse signal changes from one of its high and low levels to the other level each time the integrated signal S13 crosses the zero volt reference level, as shown in Figure 3(C). Each traverse detection pulse STRV is arranged to cause its leading or trailing edge to increase the count in the traversed track counter 6 by one step each time the optical head 2 traverses a recording track TR. Accordingly, the count in the traversed track counter 6 corresponds to the number of tracks traversed by the optical head 2.

The same problem as described previously in connection with the traverse detection circuit of Figure 4 also occurs with this type of access control apparatus. The reason for this is as follows.

As the speed of movement of the optical head 2 in the traversing direction increases, the frequency of the traverse signal Ltrv contained in the reproduced signal RF becomes closer to the frequency (for example, 200 kHz) of the data signal DATA. This means that the time constant of the integrating circuit INT1 provided for the purpose of eliminating the data signal DATA becomes close to the rate of change of the traverse signal Ltrv. As a result, the integrating circuit INT1 cannot remove the data signal DATA completely from the reproduced signal RF, and a noise signal DATAX corresponding to the data signal DATA is superimposed on the signal S13, as shown in Figure 3(D2). When such a noise signal DATAX is superimposed on the signal S13, the noise signal crosses the zero volt reference level at points before and after those at which the undegraded signal S13 would have crossed the zero volt reference level, so that the comparator COM2 will produce noise pulses UPX and DNX as well as a correct traverse detection pulse STRV as shown in Figure 3(E), causing an error to be introduced into the result of the counting operation of the traversed track counter 6. It may again be thought that this problem could be solved by selecting the integrating circuit INT1 to have such a slow time constant that substantially no noise signal DATAX will occur. However, this apparent solution would once more suppress not only the noise signal DATAX, but also the integrated signal S13 to such an extent that the comparator COM2 would fail to compare it with the zero volt reference level.

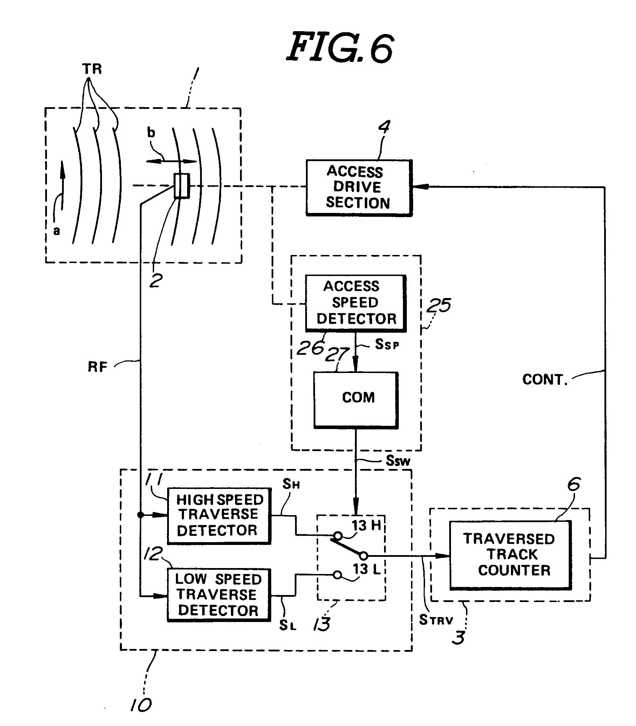

Referring to Figure 6, there is illustrated an access control apparatus made in accordance with one embodiment of the invention. Like reference numerals have been applied to Figure 6 with respect to equivalent components shown in Figure 1. The access control apparatus comprises a traverse detection circuit 10 including a high speed traverse detection circuit 11, a low speed traverse detection circuit 12, and a switching circuit 13. The high speed traverse detection circuit 11 receives the reproduced signal RF from the optical head 2 and produces a high speed traverse detection signal SH. The low speed traverse detection circuit 12 also receives the reproduced signal RF from the optical head 2 and produces a low speed traverse detection signal SL. The high speed traverse and low speed traverse detection signals SH and SL are selectively coupled through the switching circuit 13 to the traversed track counter 6 of the access control section 3.

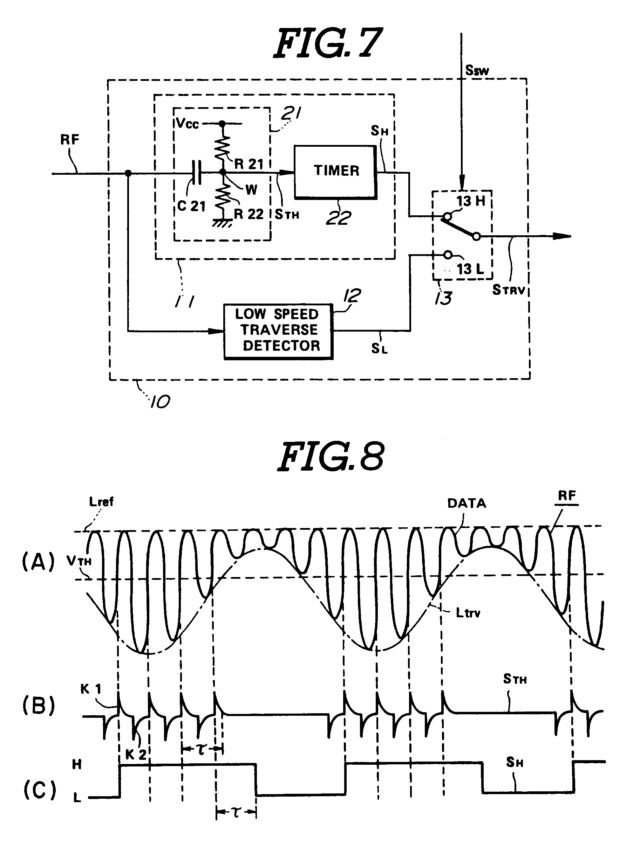

Referring to Figure 7, the high speed traverse detection circuit 11 includes a threshold circuit 21 having resistors R21 and R22 which form a voltage divider between a power supply (designated Vcc) and earth. The junction W between the resistors R21 and R22 is coupled through a capacitor C21 to an input receiving the reproduced signal RF, and also to a timer circuit 22. When the reproduced signal RF, as shown in Figure 8(A), is applied to the input of the threshold circuit 21, the threshold circuit 21 produces a threshold detection signal STH in the form of differentiated pulses produced when the data signal DATA included in the reproduced signal RF crosses a threshold voltage VTH determined by the ratio of the values of the resistors R21 and R22, as shown in Figure 8(A). The threshold detection signal STH includes first differentiated pulses K1 having a leading or upward edge produced when the data signal DATA crosses the threshold voltage VTH in an increasing direction, and second differentiated pulses K2 having a trailing or downward edge produced when the data signal DATA crosses the threshold voltage VTH in a decreasing direction. The threshold detection signal STH is applied to trigger the timer circuit 22 which may be provided in the form of a retriggerable monostable multivibrator. The timer circuit 22 produces the high speed traverse detection signal SH, as shown in Figure 8(C). In the illustrated case, the timer circuit 22 is triggered into a first state changing the high speed traverse detection signal SH to its high level in response to the leading edge of each of the first differentiated pulses K1, as shown in Figure 8(C). The timer circuit 22 remains in this first state for a time period τ preset in the timer circuit 22 and returns to its second state changing the high speed traverse detection signal SH to its low level as long as the threshold detection signal STH has no leading edge during the time period τ. If the threshold detection signal STH has another leading edge within the time period τ, the timer circuit 22 is triggered again to start the time period of the first state. As a result, the timer circuit 22 remains in the first state continuously if the threshold detection signal STH has leading edges produced at intervals of time shorter that the time period τ. It is to be noted that the time period τ set in the timer circuit 22 is selected to be somewhat longer than the longest possible period (11T) of the data signal DATA. This means that the high speed traverse detection signal SH remains at its high level continuously whenever the data signal DATA has such a level that it crosses the threshold voltage VTH.

The low speed traverse detection circuit 12 may be provided in the form of one type of traverse detection circuit 5 as shown and described in connection with Figure 4. In this case, the low speed traverse detection signal SL changes from one of its high and low levels to the other level each time the signal S11 from the first low pass filter LP1 having a fast time constant crosses the signal S12 from the second low pass filter LP2 having a slow time constant, as shown in Figure 3(C). It is, therefore, possible to provide a low speed traverse detection signal SL with no pulsation being combined therewith to the switching circuit 13 in a low speed traverse mode of operation, when the reproduced signal RF contains a traverse signal Ltrv having a period sufficiently longer than the period of the data signal DATA.

Returning to Figure 6, the position of the switching circuit 13 is controlled by a switching signal SSW fed thereto from a switching control section 25. The switching control section 25 includes an access speed detection circuit 26 sensitive to the speed of traversing movement of the optical head 2 in the direction b radially of the disc 1 thereby producing a signal SSP indicative of the sensed access speed. The access speed indication signal SSP is fed to a comparator circuit 27 of the type having positive and negative threshold values +VTHW and -VTHW set therein. The comparator circuit 27 produces a low-level switching control signal SSW when the access speed indication signal SSP is between the negative threshold value -VTHW and the positive threshold value +VTHW and a high-level switching control signal SSW when the access speed indication signal SSP is less than the negative threshold value -VTHW or greater than the positive threshold value +VTHW.

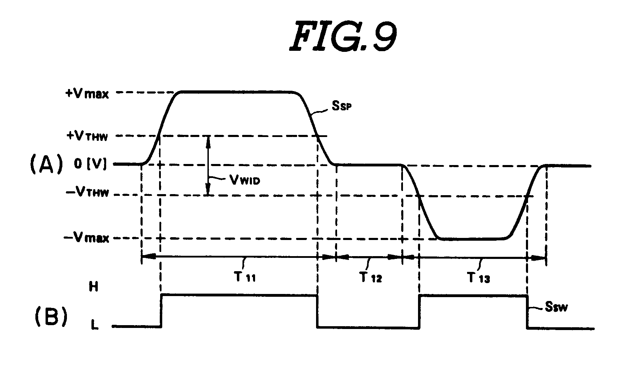

The operation of the switching control section 25 will be described in greater detail with reference to Figure 9. When access is required from one track to a desired track towards the inside of the disc 1 from the one track, a thread motor contained in the optical head access drive section 4 rotates in a clockwise direction to drive the optical head 2 inwardly with respect to the disc. During such an access mode, the thread motor changes from a stopped condition through an accelerated condition to a steady condition. When the optical head 2 becomes close to the desired track, the thread motor changes from the steady condition through a decelerated condition to the stopped condition. As the thread motor condition changes, the access speed indication signal SSP changes, as shown in Figure 9a, in which T11 is the length of time during which the optical head 2 moves from the one track to the desired inner track. When the optical head 2 is at rest, the access speed indication signal SSP is zero, as shown in Figure 9(A), and the switch control signal SSW remains at its low level, as shown in Figure 9(B). After the start of the traversing operation moving the optical head 1 radially inwardly, the access speed indication signal SSP increases towards its positive maximum value +Vmax. When the access speed indication signal SSP reaches the positive threshold value +VTHW, the switching control signal SSW changes from its low level to its high level, as shown in Figure 9(B). The access speed indication signal SSP remains at the positive maximum value +Vmax until the optical head 2 becomes close to the target recording track to which access is required. Thereafter, the access speed indication signal SSP decreases towards zero. When the access speed indication signal SSP reaches the positive threshold value +VTHW again, the switching control signal SSW changes from its high level to its low level, as shown in Figure 9(B). The access speed indication signal SSP reaches zero when the optical head 2 reaches the target recording track to which access is required.

When the disc drive is in a play or record mode, the access speed indication signal SSP remains at zero, as shown in Figure 9A, in which T12 is the length of time in the play or record mode. When access is required from one track to another track towards the outside of the disc 1 from the one track, the thread motor rotates in the anticlockwise direction to drive the optical head 2 outwardly of the disc 1. As the optical head speed changes, the access speed indication signal SSP changes, as shown in Figure 9A, in which T13 is the length of time during which the optical head 2 moves from the one track to the desired outer track. After the start of the traversing operation moving the optical head 2 radially outwardly, the access speed indication signal SSP decreases towards its negative maximum value - Vmax. When the access speed indication signal SSP reaches the negative threshold value -VTHW, the switching control signal SSW changes from its low level to its high level, as shown in Figure 9(B).

The access speed indication signal SSP remains at the negative maximum value -Vmax until the optical head 2 becomes close to the target recording track to which access is required. Thereafter, the access speed indication signal SSP increases towards zero. When the access speed indication signal SSP reaches the negative threshold value -VTHW again, the switching control signal SSW changes from its high level to its low level, as shown in Figure 9(B). The access speed indication signal SSP reaches zero when the optical head 2 reaches the target recording track to which access is required.

The switching control signal SSW is applied to the switching circuit 13 which selectively applies the high speed traverse or low speed traverse detection signals SH or SL as the traverse detection pulse signal STRV to the traversed track counter 6 of the access control section 3 according to the level of the switching control signal SSW. The switching control signal SSW is at its low level when the optical head 2 moves to traverse recording tracks inwardly or outwardly at a slow speed less than a threshold value. In the presence of such a low-level switching control signal SSW, the switching circuit 13 is in its first position coupling the low speed traverse detection circuit 12 to the traversed track counter 6. On the other hand, the switching control signal SSW is at its high level when the optical head 2 moves to traverse recording tracks inwardly or outwardly at a fast speed greater than the threshold value. In the presence of such a high-level switching control signal SSW, the switching circuit 13 is in its second position coupling the high speed traverse detection circuit 11 to the traversed track counter 6.

The operation of the access control apparatus used for rapid access from one recording track to another recording track is as follows. At the early stage of the traversing operation of the optical head 2, the optical head 2 moves at a low speed and the access speed indication signal SSP is within the range between the positive and negative threshold values +VTHW and -VTHW. Consequently, the switching control signal SSW is at its low level causing the switching circuit 13 to couple the low speed traverse detection signal SL to the traversed track counter 6. Under this condition, the period of the traverse signal Ltrv contained in the reproduced signal RF is much longer than the period of the data signal DATA. Accordingly, no pulsating noise is introduced into the low speed traverse detection signal SL, as was described previously in connection with Figure 4. Similar considerations can be applied to the late stage of the traversing operation during which the optical head 2 moves at a low speed to the target recording track.

At the intermediate stage of the traversing operation of the optical head 2, the optical head 2 moves at a high speed and the access speed indication signal SSP is greater than the positive threshold value +VTHW or less than the negative threshold value -VTHW. As a result, the switching control signal SSW is at its high level causing the switching circuit 13 to couple the high speed traverse detection signal SH to the traversed track counter 6.

This high speed traverse detection signal SH includes a pulse produced each time the optical head 2 traverses one recording track, as shown in Figure 8(C). The pulse is applied through the switching circuit 13 to increase the count in the traversed track counter 6 by one step. The high speed traverse detection signal SH will now be described in greater detail.

When the optical head 2 is traversing a recording track, the data signal DATA has such a great amplitude that it crosses the threshold voltage VTH set in the threshold circuit 21 of the high speed traverse detection circuit 11. As described previously, the timer circuit 22 is triggered again by the next differentiated pulse K1 before the lapse of the period of time during which the high speed traverse detection signal SH remains at its high level after one differentiated pulse K1 is applied thereto. Consequently, the high speed traverse detection signal SH remains at its high level for a time period longer than the time period τ, as shown in Figure 8(c), while the optical head 2 is traversing one recording track. Although the period of the data signal DATA varies within a range corresponding to the range between 3T to 11T according to the information recorded on the recording track when the optical head 2 is traversing, the high speed traverse detection signal SH remains at its high level as long as the data signal DATA crosses the threshold voltage VTH regardless of the period of the data signal DATA, since the period of time τ during which the high speed traverse detection signal SH remains at its high level after application of one differentiated pulse K1 thereto is selected such that the time period τ is slightly longer than the period of the longest possible period (corresponding to 11T) of the data signal DATA.

On the other hand, when the optical head 2 is moving between two adjacent recording tracks at the intermediate state of its traversing operation, the amplitude of the data signal contained in the reproduced signal RF is too small to cross the threshold voltage VTH so that the high speed traverse detection signal SH remains at its low level, as shown in Figure 8(C).

It is apparent from the foregoing that the apparatus is effective to avoid introduction of any error into the result of the counting operation by employing the high speed traverse detection signal SH in place of the low speed traverse detection signal SL having a noise signal DATAX superimposed thereon during the high speed traversing movement of the optical head 2.

Although the high speed traverse detection circuit 11 is arranged to receive the reproduced signal RF directly for producing the high speed traverse detection signal SH, it is to be noted that the invention is not limited to such an arrangement. Further, although the low speed traverse detection circuit 12 used in this embodiment is of the type shown in Figure 4, it is to be noted that the circuit 12 may be provided in the form of the direct comparison type traverse detection circuit as shown in Figure 5. In addition, the timer circuit 22 may be replaced with a digital timer circuit employing a programmable counter or the like. In this case, the programmable counter is arranged to start counting clock pulses from a predetermined value loaded therein when it is triggered by the threshold detection signal STH. The high speed traverse detection signal SH changes to its low level when an overflow output is provided from the programmable counter.

Although the access speed indication signal SSP is compared with positive and negative threshold voltages +VTHW and -VTHW for producing a switching signal SSW, it is to be noted that the same result may be obtained by a timer which can compare the time lapse with a time required for the optical head 2 to traverse a predetermined number of recording tracks. In addition, although the invention has been described in connection with a compact disc type unit, it is to be noted that the invention is equally applicable to disc units of other types such as a CD type ROM (read only memory) or the like having an access control apparatus for moving the head for access to a desired recording track.

## Claims

1. Access control apparatus for a disc drive having a head (2) movable with respect to tracks (TR) on a disc (1) for reproducing a signal (RF) including a data signal (DATA), the apparatus comprising: means (4) responsive to a control signal for moving the head (2) in a direction radially of the disc (1) to perform access from one track to another track;
first traverse detector means (11) responsive to the data signal (DATA) included in the reproduced signal (RF) for producing first traverse detection pulses (SH), the first traverse detector means (11) including means (21) responsive to the data signal (DATA) for producing trigger pulses (K1) for respective cycles of the data signal having a magnitude greater than a predetermined value (VTH), and a timer (22) responsive to each of the trigger pulses (K1) for changing to a first state, the timer (22) returning to a second state a predetermined time (τ) after occurrence of each trigger pulse (K1), the time (τ) being slightly longer than the longest possible period of the data signal (DATA);
a counter (6) for counting the first traverse detection pulses (SH) to accumulate a count corresponding to the number of tracks traversed by the head (2); and
means (3) for producing the control signal in accordance with the count in the counter (6);
characterised in that the apparatus includes:
means (26) for detecting the speed of movement of the head (2);
second traverse detector means (12) including a first low pass filter (LP1) having a first time constant, the first low pass filter (LP1) being arranged to receive the reproduced signal (RF) for producing a first filtered signal (S11), a second low pass filter (LP2) having a second time constant slower than the first time constant, the second low pass filter (LP2) being arranged to receive the reproduced signal (RF) for producing a second filtered signal (S12), and means (COM1) for producing second traverse detection pulses (SL) each produced when the first filtered signal (S11) is greater than the second filtered signal (S12); and
a switching circuit (13) including means for supplying the first traverse detection pulses (SH) to the counter (6) when the speed of movement of the head (2) exceeds a predetermined value and for supplying the second traverse detection pulses (SL) to the counter (6) when the speed of movement of the head (2) is less than the predetermined value.

2. Access control apparatus for a disc drive having a head (2) movable with respect to tracks (TR) on a disc (1) for reproducing a signal (RF) including a data signal (DATA), the apparatus comprising: means (4) responsive to a control signal for moving the head (2) in a direction radially of the disc (1) to perform access from one track to another track;
first traverse detector means (11) responsive to the data signal (DATA) included in the reproduced signal (RF) for producing first traverse detection pulses (SH), the first traverse detector means (11) including means (21) responsive to the data signal (DATA) for producing trigger pulses (K1) for respective cycles of the data signal having a magnitude greater than a predetermined value (VTH), and a timer (22) responsive to each of the trigger pulses (K1) for changing to a first state, the timer (22) returning to a second state a predetermined time (τ) after occurrence of each trigger pulse (K1), the time (τ) being slightly longer than the longest possible period of the data signal (DATA);
a counter (6) for counting the first traverse detection pulses (SH) to accumulate a count corresponding to the number of tracks traversed by the head (2); and
means (3) for producing the control signal in accordance with the count in the counter (6);
characterised in that the apparatus includes:
means (26) for detecting the speed of movement of the head (2);
second traverse detector means (12) including an integrating circuit (INT1) arranged to receive the reproduced signal (RF) for producing an integrated signal (S13), and means (COM2) for producing second traverse detection pulses (SL) each produced when the integrated signal (S13) is greater than a predetermined value; and
a switching circuit (13) including means for supplying the first traverse detection pulses (SH) to the counter (6) when the speed of movement of the head (2) exceeds a predetermined value and for supplying the second traverse detection pulses (SL) to the counter (6) when the speed of movement of the head (2) is less than the predetermined value.

## Patentansprüche

1. Zugriffssteuerungsvorrichtung für einen Plattenantrieb mit einem Kopf (2), der bezüglich der Spuren (TR) auf einer Platte(disc) (1) zur Wiedergabe eines ein Datensignal (DATA) enthaltenden Signals (RF) bewegbar ist, wobei die Vorrichtung umfaßt:
auf ein Steuersignal zur Bewegung des Kopfes (2) in eine radiale Richtung der Platte (1) reagierende Mittel (4), um den Zugriff von einer Spur auf eine andere Spur durchzuführen;
erste Kreuzungsdetektormittel (11), die auf das in dem wiedergegebenen Signal (RF) enthaltene Datensignal (DATA) zur Erzeugung von ersten Kreuzungsdetektionsimpulsen (SH) reagieren, wobei die ersten Kreuzungsdetektormittel (11) Mittel (21), die auf das Datensignal (DATA) zur Erzeugung von Triggerimpulsen (K1) für jeweilige Zyklen des Datensignals mit einer Größe, größer als ein vorbestimmter Wert (VTH), reagieren, und einen Zeitgeber (22) enthalten, der auf jeden der Triggerimpulse (K1) reagiert, um in einen ersten Zustand zu wechseln, wobei der Zeitgeber (22) eine vorbestimmte Zeit (τ) nach Auftreten von jedem Triggerimpul (K1) in einen zweiten Zustand zurückkehrt, wobei die Zeit (τ) geringfügig länger als die längste Periode des Datensignals (DATA) ist;
einen Zähler (6) zum Zählen der ersten Kreuzungsdetektionsimpulse (SH), um einen Zählerstand entsprechend der Anzahl der von dem Kopf (2) gekreuzten Spuren aufzusummieren; und
Mittel (3) zur Erzeugung des Steuersignals in Übereinstimmung mit dem Zählerstand in dem Zähler (6);
**dadurch gekennzeichnet,** daß die Vorrichtung enthält:
Mittel (26) zur Feststellung der Bewegungsgeschwindigkeit des Kopfes (2);
zweite Kreuzungsdetektormittel (12), welche einen ersten Tiefpaßfilter (LP1) mit einer ersten Zeitkonstanten, wobei das erste Tiefpaßfilter (LP1) eingerichtet ist, das wiedergegebene Signal (RF) zur Erzeugung eines ersten gefilterten Signals (S11) zu empfangen, einen zweiten Tiefpaßfilter (LP2) mit einer zweiten Zeitkonstanten, die kleiner als die erste Zeitkonstante ist, wobei das zweite Tiefpaßfilter (LP2) eingerichtet ist, das wiedergegebene Signal (RF) zur Erzeugung eines zweiten gefilterten Signals (S12) zu empfangen, und Mittel (COM1) zur Erzeugung von zweiten Kreuzungsdetektionsimpulsen (SL) enthalten, von denen jeder erzeugt wird, wenn das erste gefilterte Signal (S11) größer als das zweite gefilterte Signal (S12) ist; und
eine Schaltanordnung (13), welche Mittel zum Zuführen der ersten Kreuzungsdetektionsimpulse (SH) an den Zähler (6) enthält, wenn die Bewegungsgeschwindigkeit des Kopfes (2) einen vorbestimmten Wert überschreitet, und zum Zuführen der zweiten Überquerungsimpulse (SL) an den Zähler (6), wenn die Bewegungsgeschwindigkeit des Kopfes (2) geringer als der vorbestimmte Wert ist.

2. Zugriffssteuerungsvorrichtung für einen Plattenantrieb mit einem Kopf (2), der bezüglich der Spuren (TR) auf einer Platte(disc) (1) zur Wiedergabe eines ein Datensignal (DATA) enthaltenden Signals (RF) bewegbar ist, wobei die Vorrichtung umfaßt:
auf ein Steuersignal zur Bewegung des Kopfes (2) in eine radiale Richtung der Platte (1) reagierende Mittel (4), um den Zugriff von einer Spur auf eine andere Spur durchzuführen;
erste Kreuzungsdetektormittel (11), die auf das in dem wiedergegebenen Signal (RF) enthaltene Datensignal (DATA) zur Erzeugung von ersten Kreuzungsdetektionsimpulsen (SH) reagieren, wobei die ersten Kreuzungsdetektormittel (11) Mittel (21), die auf das Datensignal (DATA) zur Erzeugung von Triggerimpulsen (K1) für jeweilige Zyklen des Datensignals mit einer Größe, größer als ein vorbestimmter Wert (VTH) reagieren, und einen Zeitgeber (22) enthalten, der auf jeden der Triggerimpulse (K1) reagiert, um in einen ersten Zustand zu wechseln, wobei der Zeitgeber (22) eine vorbestimmte Zeit (τ) nach Auftreten von jedem Triggerimpuls (K1) in einen zweiten Zustand zurückkehrt, wobei die Zeit (τ) geringfügig länger als die längste Periode des Datensignals (DATA) ist;
einen Zähler (6) zum Zählen der ersten Kreuzungsdetektionsimpulse (SH), um einen Zählerstand entsprechend der Anzahl der von dem Kopf (2) gekreuzten Spuren aufzusummieren; und
Mittel (3) zur Erzeugung des Steuersignals in Übereinstimmung mit dem Zählerstand in dem Zähler (6);
**dadurch gekennzeichnet,** daß die Vorrichtung enthält: Mittel (26) zur Feststellung der Bewegungsgeschwindigkeit des Kopfes (2);
zweite Kreuzungsdetektormittel (12), welche ein Integrierglied (INT1), das eingerichtet ist, das wiedergegebene Signal (RF) zur Erzeugung eines integrierten Signals (S13) zu empfangen, und Mittel (COM2) zur Erzeugung von zweiten Kreuzungsdetektionsimpulsen (SL) enthalten, von denen jeder erzeugt wird, wenn das integrierte Signal (S13) größer als ein vorbestimmter Wert ist; und
eine Schaltanordnung (13), welche Mittel zum Zuführen der ersten Kreuzungsdetektionsimpulse (SH) an den Zähler (6) enthält, wenn die Bewegungsgeschwindigkeit des Kopfes (2) einen vorbestimmten Wert überschreitet und zum Zuführen der zweiten Überquerungsimpulse (SL) an den Zähler (6), wenn die Bewegungsgeschwindigkeit des Kopfes (2) geringer als der vorbestimmte Wert ist.

## Revendications

1. Appareil de commande d'accès pour un dispositif de pilotage de disque comportant une tête (2) mobile par rapport à des pistes (TR) formées sur un disque (1) pour reproduire un signal (RF) incluant un signal de données (DONNEES), l'appareil comprenant :
un moyen (4) sensible à un signal de commande pour déplacer la tête (2) suivant une direction radiale du disque (1) pour effectuer un accès depuis une piste à une autre piste ;
un premier moyen de détecteur de traversée (11) sensible au signal de données (DONNEES) inclus dans le signal reproduit (RF) pour produire des premières impulsions de détection de traversée (SH), le premier moyen de détecteur de traversée (11) incluant un moyen (21) sensible au signal de données (DONNEES) pour produire des impulsions de déclencheur (K1) pour des cycles respectifs du signal de données présentant une amplitude supérieure à une valeur prédéterminée (VTH) et une minuterie (22) sensible à chacune des impulsions de déclencheur (K1) pour passer à un premier état, la minuterie (22) retournant à un second état une durée prédéterminé (τ) après la survenue de chaque impulsion de déclencheur (K1), la durée (τ) étant légèrement plus longue que la période la plus longue possible du signal de données (DONNEES) ;
un compteur (6) pour compter les premières impulsions de détection de traversée (SH) afin d'accumuler une valeur de comptage correspondant au nombre de pistes traversées par la tête (2) ; et
un moyen (3) pour produire le signal de commande en relation avec la valeur de comptage dans le compteur (6),
caractérisé en ce que l'appareil inclut :
un moyen (26) pour détecter la vitesse de déplacement de la tête (2) ;
un second moyen de détecteur de traversée (12) incluant un premier filtre passe-bas (LP1) présentant une première constante de temps, le premier filtre passe-bas (LP1) étant agencé pour recevoir le signal reproduit (RF) pour produire un premier signal filtré (S11), un second filtre passe-bas (LP2) présentant une seconde constante de temps inférieure à la première constante de temps, le second filtre passe-bas (LP2) étant agencé pour recevoir le signal reproduit (RF) pour produire un second signal filtré (S12) et un moyen (COM1) pour produire des secondes impulsions de détection de traversée (SL), chacune étant produite lorsque le premier signal filtré (S11) est supérieur au second signal filtré (S12) ; et
un circuit de commutation (13) incluant un moyen pour appliquer les premières impulsions de détection de traversée (SH) au compteur (6) lorsque la vitesse de déplacement de la tête (2) excède une valeur prédéterminée et pour appliquer les secondes impulsions de détection de traversée (SL) au compteur (6) lorsque la vitesse de déplacement de la tête (2) est inférieure à la valeur prédéterminée.

2. Appareil de commande d'accès pour un dispositif de pilotage de disque comportant une tête (2) mobile par rapport à des pistes (TR) formées sur un disque (1) pour reproduire un signal (RF) incluant un signal de données (DONNEES), l'appareil comprenant :
un moyen (4) sensible à un signal de commande pour déplacer la tête (2) suivant une direction radiale du disque (1) pour effectuer un accès depuis une piste à une autre piste ;
un premier moyen de détecteur de traversée (11) sensible au signal de données (DONNEES) inclus dans le signal reproduit (RF) pour produire des premières impulsions de détection de traversée (SH), le premier moyen de détecteur de traversée (11) incluant un moyen (21) sensible au signal de données (DONNEES) pour produire des impulsions de déclencheur (K1) pour des cycles respectifs du signal de données présentant une amplitude supérieure à une valeur prédéterminée (VTH) et une minuterie (22) sensible à chacune des impulsions de déclencheur (K1) pour passer à un premier état, la minuterie (22) retournant à un second état une durée prédéterminé (τ) après la survenue de chaque impulsion de déclencheur (K1), la durée (τ) étant légèrement plus longue que la période la plus longue possible du signal de données (DONNEES) ;
un compteur (6) pour compter les premières impulsions de détection de traversée (SH) afin d'accumuler une valeur de comptage correspondant au nombre de pistes traversées par la tête (2) ; et
un moyen (3) pour produire le signal de commande en relation avec la valeur de comptage dans le compteur (6),
caractérisé en ce que l'appareil inclut :
un moyen (26) pour détecter la vitesse de déplacement de la tête (2) ;
un second moyen de détecteur de traversée (12) incluant un circuit d'intégration (INT1) agencé pour recevoir le signal reproduit (RF) pour produire un signal intégré (S13) et un moyen (COM2) pour produire des secondes impulsions de détection de traversée (SL), chacune étant produite lorsque le signal intégré (S13) est supérieur à une valeur prédéterminée ; et
un circuit de commutation (13) incluant un moyen pour appliquer les premières impulsions de détection de traversée (SH) au compteur (6) lorsque la vitesse de déplacement de la tête (2) excède une valeur prédéterminée et pour appliquer les secondes impulsions de détection de traversée (SL) au compteur (6) lorsque la vitesse de déplacement de la tête (2) est inférieure à la valeur prédéterminée.
